# EUROPÄISCHE PATENTSCHRIFT

(11) **EP 3 743 700 B1**
(45) Veröffentlichungstag und Bekanntmachung des Hinweises auf die Patenterteilung: **28.02.2024**
(21) Anmeldenummer: 19702067.0
(22) Anmeldetag: 25.01.2019
(51) Int. Cl.: G01J 5/00, G01J 5/0821, G01J 5/04

(54) **VERWENDUNG EINES LICHTWELLENLEITERS ZUR OPTISCHEN MESSUNG DER TEMPERATUR EINER HOCHTEMPERATURSCHMELZE UND VORRICHTUNG DAFÜR**
USE OF AN OPTICAL WAVEGUIDE FOR OPTICALLY MEASURING THE TEMPERATURE OF A HIGH-TEMPERATURE MELT, AND DEVICE FOR THIS PURPOSE
UTILISATION D'UN GUIDE D'ONDES DE LUMIÈRE POUR LA MESURE OPTIQUE DE LA TEMPÉRATURE D'UNE FONTE À HAUTE TEMPÉRATURE ET DISPOSITIF ASSOCIÉ

(30) Priorität: 26.01.2018 DE 102018000615
(43) Veröffentlichungstag der Anmeldung: 02.12.2020
(73) Patentinhaber: MINKON GmbH, 40699 Erkrath (DE)
(72) Erfinder: LAMP, Torsten, 40223 Düsseldorf (DE)
(74) Vertreter: König Szynka Tilmann von Renesse Patentanwälte Partnerschaft mbB Düsseldorf
(86) Internationale Anmeldenummer: PCT/EP2019/051892
(87) Internationale Veröffentlichungsnummer: WO 2019/145499

(56) Entgegenhaltungen:
- EP-A1- 1 857 792
- EP-A1- 2 799 824
- DE-A1-102014 012 697
- US-A- 5 733 043

## Beschreibung

Die Erfindung betrifft die Verwendung eines Lichtwellenleiters in einem Verfahren zur optischen Messung der Temperatur einer Hochtemperaturschmelze sowie ein Verfahren zur optischen Messung der Temperatur einer Hochtemperaturschmelze als auch einen Konverter. Dabei leitet der Lichtwellenleiter elektromagnetische Wellen von der Messstelle zu einem optischen Detektor. Der optische Detektor dient zur Bestimmung der Temperatur der Hochtemperaturschmelze, indem die von dem Lichtwellenleiter zum optischen Detektor geleitete elektromagnetische Strahlung analysiert wird. Der Lichtwellenleiter wird durch eine Leitung zur Messstelle transportiert. Angetrieben wird er dabei durch ein Fluid, das durch die Leitung strömt. Der Lichtwellenleiter weist einen Kern, einen Mantel und eine Beschichtung auf, wobei die Beschichtung eine Schutzschicht und eine äußere Schutzhülle umfasst.

Die Verwendungen von derartigen Lichtwellenleitern zur optischen Messung der Temperatur einer Hochtemperaturschmelze sind bereits bekannt. In der internationalen Patentanmeldung WO 2007/079894 A1 ist ein Konverter mit einem Behälter zur Aufnahme geschmolzenen Metalls offenbart. Der Konverter weist außerdem eine Messvorrichtung zur optischen Messung der Temperatur des geschmolzenen Metalls auf. Die Messvorrichtung umfasst einen Lichtwellenleiter, um von dem geschmolzenen Metall emittierte elektromagnetische Strahlung zu einem optischen Detektor zu leiten. Die Messvorrichtung umfasst weiterhin einen optischen Detektor zur Bestimmung der Temperatur des geschmolzenen Metalls aus einer Analyse der elektromagnetischen Strahlung. Zwischen dem optischen Detektor und dem Behälter ist eine Leitung angeordnet, durch die Fluid strömt. Der Lichtwellenleiter wird in der Leitung in Richtung der Messstelle bewegt, wobei er mit Hilfe des strömenden Fluids bewegt wird.

Um die Temperatur des geschmolzenen Metalls im Konverter kontinuierlich messen zu können, lehrt die internationale Patentanmeldung WO 2007/079894 A1, den Lichtwellenleiter kontinuierlich der Messstelle, also der Metallschmelze, zuzuführen. Das ist notwendig, da die hohen Temperaturen der Metallschmelze dazu führen, dass der Lichtwellenleiter an seinem in das geschmolzene Metall eingetauchte Ende bzw. in unmittelbarer Nähe zu dem geschmolzenen Metall gebrachten Ende allmählich aufschmilzt.

Als Lichtwellenleiter, der im Konverter verwendet werden kann, offenbart die internationale Patentanmeldung WO 2007/079894 A1 den Typen G62,5/125. Dieser umfasst einen Kern, einen Mantel und eine Beschichtung. Die Beschichtung besteht aus einer Schutzschicht, die als Primärbeschichtung bezeichnet wird. Die Primärbeschichtung reicht aber nicht aus, um den Lichtwellenleiter ausreichend vor mechanischen und thermischen Belastungen zu schützen.

Aus der DE 10 2014 012 697 A1 ist eine Abspulvorrichtung für ein Verfahren zur optischen Temperaturbestimmung eines geschmolzenen Metalls bekannt, bei dem mittels eines Lichtwellenleiters von dem Metall oder von der Spitze des Lichtwellenleiters imitierte elektromagnetische Strahlung zu einem optischen Detektor geleitet wird, wobei die Abspulvorrichtung eine Fördervorrichtung aufweist, die mindestens eine Fluid durchströmte Leitung aufweist, wobei der Lichtwellenleiter in der Leitung mittels der Fluidströmung transportiert wird.

Aus der EP 2 799 824 A1 ist ein Verfahren zur Bestimmung der Temperatur einer Hochtemperaturschmelze unter Einsatz eines Lichtwellenleiters bekannt. Bei der EP 2 799 824 A1 ist zur Förderung des Lichtwellenleiters ein Motor vorgesehen.

Im Stand der Technik weist daher ein Lichtwellenleiter, der zur optischen Messung der Temperatur einer Hochtemperaturschmelze verwendet wird, eine Beschichtung auf, die zusätzlich zur Schutzschicht eine äußere Schutzhülle aufweist. Die äußere Schutzhülle wird üblicherweise auch als Sekundärbeschichtung bezeichnet. Bei einem für den oben beschriebenen Zweck verwendeten Lichtwellenleiter ist die Schutzschicht mit der Schutzhülle lose verbunden, d.h. die Schutzschicht wird von der äußeren Schutzhülle umgeben, der Außendurchmesser der Schutzschicht ist aber kleiner als der Innendurchmesser der äußeren Schutzhülle. Dadurch soll insbesondere vermieden werden, dass mechanische und thermische Belastungen unmittelbar von der äußeren Schutzhülle auf die Schutzschicht und dadurch auf den Mantel und Kern übertragen werden. Es wird befürchtet, dass dadurch die Signalübertragung verschlechtert wird. Stattdessen sollen durch die lose Verbindung mechanische Belastungen nahezu ausschließlich von der äußeren Schutzhülle aufgenommen werden.

Es wurde erkannt, dass diese Art der Beschichtung eines Lichtwellenleiters sich nachteilig auf seine Strömungseigenschaften auswirkt. Der Lichtwellenleiter verdreht sich in der Leitung, wenn er mit Hilfe des Fluids in der Leitung zur Messstelle bewegt werden soll. Dadurch kann der Lichtwellenleiter nicht kontrolliert zur Messstelle bewegt werden und der Lichtwellenleiter kann sogar in der Leitung steckenbleiben. Das wiederum hat zur Folge, dass insbesondere eine kontinuierliche Temperaturmessung, die zum Beispiel für die Temperaturregelung wichtig ist, nicht gewährleistet werden kann.

Aufgabe der vorliegenden Erfindung ist es daher, eine Verwendung eines Lichtwellenleiters in einem Verfahren zur optischen Messung der Temperatur einer Hochtemperaturschmelze sowie ein solches Verfahren und einen Konverter vorzuschlagen, bei denen der Lichtwellenleiter mit Hilfe eines Fluids durch eine von dem Fluid durchströmte Leitung zur Messstelle bewegt wird, bei der die kontrollierte Zuführung des Lichtwellenleiters zur Messstelle verbessert wird.

Diese Aufgabe wird gemäß der Gegenstände der Ansprüche 1, 7 und 8 gelöst. Vorteilhafte Ausführungsformen der vorliegenden Erfindung sind Gegenstand der abhängigen Patentansprüche und ergeben sich aus der nachfolgenden Beschreibung.

Kerngedanke der Erfindung ist, einen Lichtwellenleiter zu verwenden, der eine Beschichtung aufweist, die eine Schutzschicht und eine äußere Schutzhülle umfasst, wobei die äußere Schutzhülle mit der Schutzschicht fest verbunden ist. Es hat sich gezeigt, dass ein derartiger Lichtwellenleiter deutlich bessere Strömungseigenschaften aufweist, als ein Lichtwellenleiter mit einer losen Verbindung zwischen Schutzschicht und äußerer Schutzhülle. Der Lichtwellenleiter kann somit durch die fluiddurchströmte Leitung kontrollierter zur Messstelle bewegt werden, ohne dass er sich verdreht oder in der Leitung steckenbleibt. Insbesondere kann dadurch eine kontinuierliche Messung der Hochtemperaturschmelze gewährleistet werden, die insbesondere für die Regelung der Schmelzbadtemperatur wichtig ist. Fehlt diese, kann es dazu kommen, dass die Hochtemperaturschmelze für die weitere Bearbeitung unbrauchbar wird. Das verursacht gerade bei Metallschmelzen hohe Verluste. Insbesondere ist ein hoher Energieaufwand zum Schmelzen einer großen Menge von Metall erforderlich. Zudem kann es bis zur Entsorgung der unbrauchbaren Metallschmelze zu langen Stillstandzeiten kommen.

Der Begriff "Lichtwellenleiter" umfasst im Sinne der Erfindung einen Kern, einen Mantel und eine Beschichtung (Elemente des Lichtwellenleiters). Die Elemente des Lichtwellenleiters sind üblicherweise zylinderförmig und zueinander koaxial angeordnet. Dabei umgibt der Mantel den Kern und die Beschichtung den Mantel. Die Länge des Lichtwellenleiters ist üblicherweise viel größer als sein Durchmesser.

Der Kern und der Mantel (Faser) dienen dabei der Leitung von elektromagnetischen Wellen. Das Material des Kerns weist einen höheren Brechungsindex auf, als das Material des Mantels. Dadurch kommt es an der Grenzfläche zwischen Kern und Mantel nahezu zur Totalreflexion der elektromagnetischen Wellen. Elektromagnetische Wellen, die von einem Ende des Lichtwellenleiters in den Lichtwellenleiter eindringen werden an der besagten Grenzfläche so lange reflektiert, bis sie an dem anderen Ende des Lichtwellenleiters austreten. Die elektromagnetischen Wellen werden dabei nahezu verlustfrei weitergeleitet.

Üblicherweise bestehen Kern und Mantel aus Quarzglas, wobei der Kern üblicherweise mit Fremdatomen dotiert wird, um ihm einen höheren Brechungsindex zu verleihen. Andere Materialien für den Kern und den Mantel, die aus dem Stand der Technik bekannt sind, eignen sich grundsätzlich auch für die Erfindung.

Die Beschichtung weist erfindungsgemäß eine Schutzschicht und eine äußere Schutzhülle auf. Die Schutzschicht und die äußere Schutzhülle sind üblicherweise ebenfalls koaxial zum Kern und Mantel und haben üblicherweise eine zylindrische Form. Die Schutzschicht dient dem Schutz des Kerns und Mantels insbesondere bei Transport und Verlegung des Lichtwellenleiters vor mechanischen Belastungen. Die Schutzschicht umgibt üblicherweise unmittelbar den Mantel. Zwischen Mantel und Schutzschicht herrscht üblicherweise eine feste Verbindung. Denn bei der Aufbringung der Schutzschicht auf den Mantel wird die Faser durch einen Extruder geführt, in dem sich erhitztes Extrusionsgut befindet. Dieses Extrusionsgut, das bei der Extrusion auf die Faser aufgebracht wird, ist üblicherweise erhitzter Kunststoff, z. B. Polyimid, Acryl oder Silikon, und ist das Material, aus dem die spätere Schutzschicht besteht. Damit das Extrusionsgut nach Aufbringung auf die Faser schneller aushärtet, wird es üblicherweise mit UV-Licht bestrahlt.

Die Schutzschicht, die üblicherweise auch als Primärschicht oder Primärbeschichtung bezeichnet wird, kann auch mehrere Schichten umfassen.

Die Schutzschicht reicht jedoch nicht aus, um die Faser ausreichend vor mechanischen und thermischen Belastungen, insbesondere beim Verlegen und Transportieren des Lichtwellenleiters, zu schützen. Daher umfasst die Beschichtung zusätzlich eine äußere Schutzhülle, die üblicherweise auch als Sekundärschicht oder Sekundärbeschichtung bezeichnet wird. Üblicherweise ist die äußere Schutzhülle aus Kunststoff und bildet die äußerste Schicht der Beschichtung des Lichtwellenleiters, grenzt diesen also nach außen hin ab.

Die äußere Schutzhülle ist mit der Schutzschicht fest verbunden. Die Formulierung "fest verbunden" im Sinne der Erfindung umfasst eine Verbindung zwischen äußerer Schutzhülle und Schutzschicht derart, dass die Außenfläche der Schutzschicht mit der Innenfläche der Schutzhülle in Kontakt steht. Dabei meint "Innenfläche" die Fläche der äußeren Schutzhülle, die sich in Richtung der Längsachse des Lichtwellenleiters erstreckt und die der Längsachse zugewandt ist. "Außenfläche" meint die Fläche der Schutzschicht, die sich in Längsrichtung des Lichtwellenleiters erstreckt und die der Längsachse abgewandt ist. Üblicherweise sind die Schutzschicht und die äußere Schutzhülle hohlzylinderförmig. Dann ist die Außenfläche der Schutzschicht der Außenmantel der Schutzschicht und die Innenfläche der äußeren Schutzhülle der Innenmantel der äußeren Schutzhülle.

Die Außenfläche der Schutzschicht steht mit der Innenfläche der äußeren Schutzhülle derart in Kontakt, dass eine Relativbewegung zwischen Schutzschicht und äußerer Schutzhülle blockiert ist.

Das kann beispielsweise durch Verkleben der Schutzschicht mit der äußeren Schutzhülle realisiert werden. Somit umfasst die Formulierung "in Kontakt stehen" auch, dass zwischen der Außenfläche der Schutzschicht und der Innenfläche der äußeren Schutzhülle eine Zwischenschicht vorhanden sei kann, insbesondere eine Haftmittelschicht. Denkbar ist aber auch, dass die Zwischenschicht durch ein Gel gebildet wird.

Da zwischen der Schutzschicht und der äußeren Schutzhülle kein Freiraum ist, der eine Relativbewegung zwischen Schutzschicht und äußerer Schutzhülle erlaubt, hat ein Lichtwellenleiter mit der erfindungsgemäßen Beschichtung ein kleineres Volumen und ist kompakter als ein entsprechender Lichtwellenleiter mit einer losen Verbindung zwischen Schutzschicht und äußerer Schutzhülle. Insbesondere vorteilhaft sind dadurch seine strömungsmechanischen Eigenschaften, die sich bei der Verwendung des Lichtwellenleiters zur optischen Messung der Temperatur einer Hochtemperaturschmelze, bei welcher der Lichtwellenleiter durch eine fluiddurchströmte Leitung zur Messstelle bewegt wird, bemerkbar machen. Der Lichtwellenleiter kann dadurch ohne Verdrehung, Steckenbleiben oder Verknäulen kontinuierlich durch die Leitung transportiert werden.

Unter "elektromagnetische Wellen" sind alle elektromagnetischen Wellen zu verstehen, die von einer Hochtemperaturschmelze ausgestrahlt werden können.

Der Begriff "Hochtemperaturschmelze" umfasst in Sinne der Erfindung insbesondere Metallschmelzen. Unter einer Metallschmelze ist insbesondere geschmolzenes Metall zu verstehen. Sie kann ein oder mehrere Metalle aufweisen. Insbesondere eignet sich die erfindungsgemäße Verwendung zum Messen der Temperatur von Stahlschmelzen und Aluminiumschmelzen. Des Weiteren umfasst der Begriff "Hochtemperaturschmelze" nichtmetallische Schmelzen, wie z.B. Salzschmelzen und eine Mischung aus metallischen und nichtmetallischen Schmelzen.

Der Begriff "Messstelle" umfasst im Sinne der Erfindung eine Stelle, an der sich die Hochtemperaturschmelze befindet. Er umfasst aber auch eine Stelle, an der sich keine Hochtemperaturschmelze befindet, die aber idealerweise so nah an der Hochtemperaturschmelze ist, dass die elektromagnetischen Wellen in einer für die Temperaturmessung brauchbaren Qualität und Quantität in den Lichtwellenleiter eindringen können.

Als Fluid für die Bewegung des Lichtwellenleiters in der Leitung wird vorzugsweise entweder ein ohnehin für die jeweilige Behandlung der Hochtemperaturschmelze notwendiges Fluid, beispielsweise Sauerstoff bei geschmolzenem Stahl im Konverterprozess, verwendet. Alternativ können auch andere Gase eingesetzt werden, wie beispielsweise Inertgase.

In einer bevorzugten Ausführungsform ist die Beschichtung antistatisch. Unter "antistatisch" ist zu verstehen, dass die Beschichtung elektrostatische Aufladungen verhindert oder aufhebt. Insbesondere bevorzugt ist die äußere Schutzhülle antistatisch. Dies kann zum Beispiel dadurch erreicht werden, dass dem Material der äußeren Schutzhülle antistatisch wirkende Mittel zugefügt werden.

Elektrostatische Aufladungen haben sich bei der Bewegung des Lichtwellenleiters durch eine fluiddurchströmte Leitung zur Messung einer Hochtemperaturschmelze als problematisch erwiesen, da durch die elektrostatischen Anziehungskräfte der Lichtwellenleiter dazu neigt, an der Leiterwand haften zu bleiben. Zusätzlich zur festen Verbindung zwischen der Schutzschicht und der äußeren Schutzhülle lassen sich die Führungseigenschaften des Lichtwellenleiters durch die fluiddurchströmte Leitung nochmals verbessern.

In einer bevorzugten Ausführungsform enthält die äußere Schutzhülle reibungsmindernde Zusätze. Insbesondere kann dies dadurch erreicht werden, dass dem Material der äußeren Schutzhülle reibungsmindernde Additive zugesetzt werden. Durch die reibungsmindernden Zusätze kann der Lichtwellenleiter einfacher durch die Leitung geführt werden. Zudem verringert eine reibungsarme Führung des Lichtwellenleiters durch die Leitung elektrostatische Aufladungen. Als Zusatz kann beispielsweise das durch die Firma Clariant aus Frankfurt am Main unter dem Produktnamen Hostastat vertriebene Produkt oder das von der Firma Bayer unter dem Produktnamen Irgastat vertriebene Produkt oder das von der Firma DuPont unter dem Produktnamen Entira vertriebene Produkt eingesetzt werden.

In einer bevorzugten Ausführungsform weist der Lichtwellenleiter ein Gewicht von höchstens 0,3 kg pro Kilometer Leiterlänge auf. Dadurch, dass der Lichtwellenleiter so leicht ist, kann er besser durch die Leitung eingeblasen werden. Es hat sich gezeigt, dass ein Gewicht von 0,22 kg pro Kilometer Leiterlänge für die Strömungseigenschaften des Lichtwellenleiters optimal ist.

In einer bevorzugten Ausführungsform hat der Lichtwellenleiter einen Gesamtdurchmesser von weniger als 600µm, insbesondere bevorzugt von weniger als 500µm, insbesondere bevorzugt von weniger als 400µm.

Bevorzugt weist der Lichtwellenleiter eine Multimodefaser auf. Im Gegensatz zu Monomodefasern ist der Kerndurchmesser bei der Multimodefaser deutlich größer. Der Vorteil, der sich daraus ergibt, ist, dass eine größere Lichtmenge in den Lichtwellenleiter eingespeist und durch diesen zum optischen Detektor geleitet werden kann. Zwar leiden Multimodefasern unter Modendispersion. Dadurch kommt es bei sehr großen Lichtwellenleiterlängen, die insbesondere in der Nachrichtentechnik eingesetzt werden, zu Übertragungsfehlern. Für die erfindungsgemäße Verwendung ist dieses Problem aber kaum relevant, da Übertragungsstrecken von vielen Kilometern zwar denkbar sind, aber selten vorkommen. Zudem haben Multimodefasern gegenüber den Monomodefasern die Vorteile, dass sie günstiger in der Herstellung und weniger empfindlich beim Verlegen oder Transportieren sind. Denkbar sind aber auch Ausführungsformen mit Monomodefasern. Als Faserkategorien kommen insbesondere OS2, OM1, OM2, OM3, OM4 in Betracht.

Bevorzugt ist eine Multimodefaser mit einem Kerndurchmesser von 62,5 und einem Manteldurchmesser von 125µm, insbesondere bevorzugt nach der Faserkategorie OM1. Denkbar ist auch ein Faserdurchmesser von 50 und ein Manteldurchmesser von 125µm.

Das erfindungsgemäße Verfahren zur optischen Messung der Temperatur einer Hochtemperaturschmelze sieht vor, dass der Lichtwellenleiter elektromagnetische Wellen von einer Messstelle zu einem optischen Detektor leitet und mit Hilfe eines Fluids durch eine von dem Fluid durchströmte Leitung zur Messstelle bewegt wird, wobei der verwendete Lichtwellenleiter einen Kern, einen Mantel und eine Beschichtung aufweist, wobei die Beschichtung eine Schutzschicht und eine äußere Schutzhülle umfasst und die äußere Schutzhülle mit der Schutzschicht fest verbunden ist.

Der erfindungsgemäße Konverter weist einen Behälter zur Aufnahme geschmolzenen Metalls und eine Messvorrichtung zur optischen Temperaturbestimmung des geschmolzenen Metalls auf und ist mit
- einem Lichtwellenleiter, um von dem Metall oder von der Spitze des Lichtwellenleiters emittierte elektromagnetische Strahlung zu einem optischen Detektor zu leiten,
- einem optischen Detektor zur Bestimmung der Temperatur des Metalls aus einer Analyse der elektromagnetischen Strahlung und
- einer zwischen dem optischen Detektor und dem Behälter angeordneten fluiddurchströmten Leitung, in der der Lichtwellenleiter zumindest abschnittweise geführt wird und in der der Lichtwellenleiter mit Hilfe des Fluids transportiert wird,
ausgeführt, wobei der Lichtwellenleiter einen Kern, einen Mantel und eine Beschichtung aufweist, wobei die Beschichtung eine Schutzschicht und eine äußere Schutzhülle umfasst und die äußere Schutzhülle mit der Schutzschicht fest verbunden ist.

Die Erfindung wird nachfolgend anhand der nachfolgenden Figur, die lediglich eine vorteilhafte Ausführungsform der Erfindung zeigen, näher erläutert. Darin zeigt:

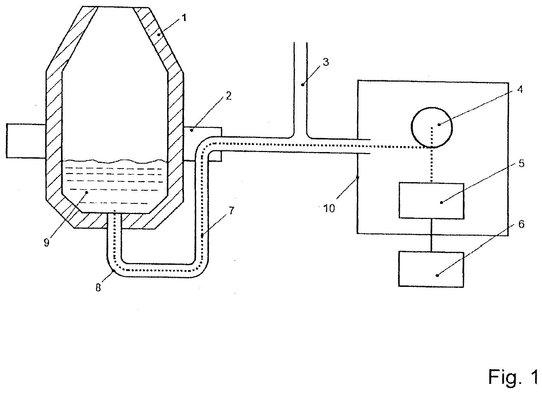

- Fig. 1: beispielhafte Verwendung eines Lichtwellenleiters zur optischen Messung der Temperatur einer Hochtemperaturschmelze und

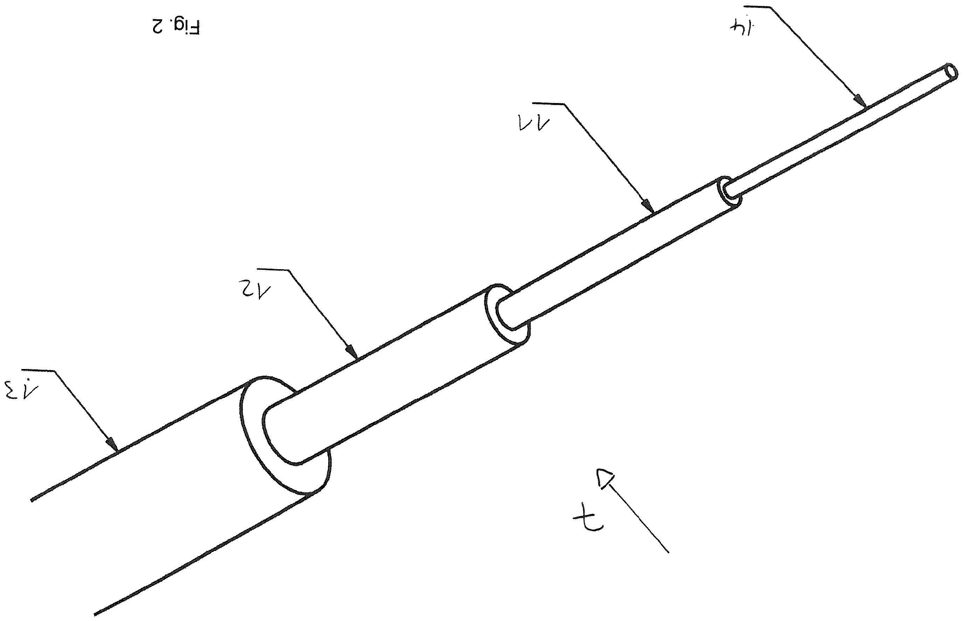

- Fig. 2: eine perspektivische, auseinandergezogene Ansicht des erfindungsgemäß zu verwendenden Lichtwellenleiters.

Die Figur zeigt einen Behälter 1 zur Aufnahme einer Hochtemperaturschmelze, die vorliegend geschmolzenes Metall ist. Dieser Behälter 1 ist über Drehzapfen 2 in einem nicht dargestellten Gestell gelagert. Eine Gaszuführung 3 führt von einer nicht näher dargestellten Gasquelle über eine Gasleitung 8 zu einer im Bodenbereich des Behälters 1 vorgesehenen Gasöffnung. Über die Gaszuführung 3 kann dem Metallbad 9 Gas zugeführt werden.

Ferner dargestellt sind eine Abspulvorrichtung 4, auf der ein Lichtwellenleiter 7 aufgespult ist. Ein Ende des Lichtwellenleiters 7 ist mit einem optischen Detektor 5 verbunden, der mit einer Signalauswertung 6 verbunden ist. Die Abspulvorrichtung 4 und der optische Detektor 5 können in einer vor Wärme schützenden Einhausung 10 untergebracht sein. Der Lichtwellenleiter 7 wird durch die Gasleitung 8, welche mittels der Gaszuführung 3 mit Gas versorgt wird, in das Metallbad 9 eingeführt.

Das in das Metallbad 9 hineinreichende Ende des Lichtwellenleiters 7 nimmt die Strahlung des geschmolzenen Metalls auf und leitet sie über den Lichtwellenleiter 7 zu dem optischen Detektor 5. Dort werden die optischen Signale in elektronische Signale umgewandelt, die von der Signalauswertung 6 weiter bearbeitet werden können, um die Temperatur des Metalls im Metallbad 9 zu ermitteln. Da die Temperatur des geschmolzenen Metalls zum Schmelzen des eingetauchten Endes des Lichtwellenleiters führt, muss der Lichtwellenleiter 7 nachgeführt werden. Dies erfolgt mit Hilfe des durch die Gaszuführung 3 und die Gasleitung 8 strömenden Gases.

Der Lichtwellenleiter 7 weist dabei einen Kern 14, einen Mantel 11 und eine Beschichtung auf. Der Kern 14 hat einen Durchmesser von 62,5µm und der Mantel 11 einen Durchmesser von 125µm. Die Faser des Lichtwellenleiters 7 ist im vorliegenden Beispiel eine Multimodefaser der Faserkategorie OM1. Die Beschichtung weist eine Schutzschicht 12 und eine äußere Schutzhülle 13 auf, die fest miteinander verbunden sind. Die äußere Schutzhülle 13 ist antistatisch und enthält reibungsmindernde Zusätze. Der Lichtwellenleiter 7 hat ein Gewicht von 0,22 kg pro Kilometer Leiterlänge.

## Patentansprüche

1. Verwendung eines Lichtwellenleiters (7) in einem Verfahren zur optischen Messung der Temperatur einer Hochtemperaturschmelze (9), bei dem der Lichtwellenleiter (7) elektromagnetische Wellen von einer Messstelle zu einem optischen Detektor (5) leitet und mit Hilfe eines Fluids durch eine von dem Fluid durchströmte Leitung (8) zur Messstelle bewegt wird, wobei der verwendete Lichtwellenleiter (7) einen Kern (14), einen Mantel (11) und eine Beschichtung aufweist, wobei die Beschichtung eine Schutzschicht (12) und eine äußere Schutzhülle (13) umfasst, **dadurch gekennzeichnet, dass** die äußere Schutzhülle (13) mit der Schutzschicht (12) fest verbunden ist, wobei eine Relativbewegung zwischen der Schutzschicht (12) und der äußeren Schutzhülle (13) blockiert ist.

2. Verwendung eines Lichtwellenleiters (7) nach Anspruch 1, **dadurch gekennzeichnet, dass** die äußere Schutzhülle (13) aus Kunststoff ist.

3. Verwendung eines Lichtwellenleiters (7) nach Anspruch 1 oder 2, wobei die Beschichtung antistatisch ist, nämlich der äußeren Schutzhülle (13) antistatische Mittel zugefügt sind.

4. Verwendung nach einem der vorhergehenden Ansprüche, wobei der Lichtwellenleiter (7) ein Gewicht von höchstens 0,3, bevorzugt von 0,22 kg pro Kilometer Leiterlänge hat.

5. Verwendung nach einem der vorhergehenden Ansprüche, wobei der Lichtwellenleiter (7) eine Multimodefaser aufweist.

6. Verwendung nach Anspruch 4, wobei der Lichtwellenleiter (7) einen Kerndurchmesser von 62,5µm und einen Manteldurchmesser von 125µm hat.

7. Verfahren zur optischen Messung der Temperatur einer Hochtemperaturschmelze (9), bei dem der Lichtwellenleiter (7) elektromagnetische Wellen von einer Messstelle zu einem optischen Detektor (5) leitet und mit Hilfe eines Fluids durch eine von dem Fluid durchströmte Leitung (8) zur Messstelle bewegt wird, wobei der verwendete Lichtwellenleiter (7) einen Kern (14), einen Mantel (11) und eine Beschichtung aufweist, wobei die Beschichtung eine Schutzschicht (12) und eine äußere Schutzhülle (13) umfasst und die äußere Schutzhülle (13) mit der Schutzschicht (12) fest verbunden ist, wobei eine Relativbewegung zwischen der Schutzschicht (12) und der äußeren Schutzhülle (13) blockiert ist.

8. Konverter mit einem Behälter (1) zur Aufnahme geschmolzenen Metalls und einer Messvorrichtung zur optischen Temperaturbestimmung des geschmolzenen Metalls mit
• einem Lichtwellenleiter (7), um von dem Metall oder von der Spitze des Lichtwellenleiters (7) emittierte elektromagnetische Strahlung zu einem optischen Detektor(5) zu leiten,
• einem optischen Detektor (5) zur Bestimmung der Temperatur des Metalls aus einer Analyse der elektromagnetischen Strahlung und
• einer zwischen dem optischen Detektor (5) und dem Behälter (1) angeordneten fluiddurchströmten Leitung, in der der Lichtwellenleiter (7) zumindest abschnittweise geführt wird und in der der Lichtwellenleiter (7) mit Hilfe des Fluids transportiert wird,
wobei der Lichtwellenleiter (7) einen Kern (14), einen Mantel (11) und eine Beschichtung aufweist, wobei die Beschichtung eine Schutzschicht (12) und eine äußere Schutzhülle (13) umfasst, **dadurch gekennzeichnet, dass** die äußere Schutzhülle (13) mit der Schutzschicht (12) fest verbunden ist, wobei eine Relativbewegung zwischen der Schutzschicht (12) und der äußeren Schutzhülle (13) blockiert ist.

## Claims

1. Use of an optical waveguide (7) in a method for optically measuring the temperature of a high-temperature melt (9), in which the optical waveguide (7) guides electromagnetic waves from a measuring point to an optical detector (5) and is moved to the measuring point with the help of a fluid through a conduit (8) through which the fluid flows, wherein the optical waveguide (7) used has a core (14), a casing (11) and a coating, wherein the coating comprises a protective layer (12) and an outer protective sheath (13), **characterized in that** the outer protective sheath (13) is firmly connected to the protective layer (12), wherein relative movement between the protective layer (12) and the outer protective sheath (13) is blocked.

2. Use of an optical waveguide (7) according to Claim 1, **characterized in that** the outer protective sheath (13) is made of plastic.

3. Use of an optical waveguide (7) according to Claim 1 or 2, wherein the coating is antistatic, i.e. antistatic agents are added to the outer protective sheath (13).

4. Use according to any one of the preceding claims, wherein the optical waveguide (7) has a weight of at most 0.3, preferably 0.22 kg per kilometre of conductor length.

5. Use according to any one of the preceding claims, wherein the optical waveguide (7) has a multimode fibre.

6. Use according to Claim 4, wherein the optical waveguide (7) has a core diameter of 62.5 µm and a casing diameter of 125µm.

7. Method for optically measuring the temperature of a high-temperature melt (9), in which the optical waveguide (7) guides electromagnetic waves from a measuring point to an optical detector (5) and is moved to the measuring point with the help of a fluid through a conduit (8) through which the fluid flows, wherein the optical waveguide (7) used has a core (14), a casing (11) and a coating, wherein the coating comprises a protective layer (12) and an outer protective sheath (13) and the outer protective sheath (13) is firmly connected to the protective layer (12), wherein relative movement between the protective layer (12) and the outer protective sheath (13) is blocked.

8. Converter with a container (1) for receiving molten metal and a measuring device for optically determining the temperature of the molten metal, comprising:
• an optical waveguide (7) for guiding electromagnetic radiation emitted by the metal or the tip of the optical waveguide (7) to an optical detector (5),
• an optical detector (5) for determining the temperature of the metal from an analysis of the electromagnetic radiation and
• a conduit through which fluid flows which is arranged between the optical detector (5) and the container (1), in which conduit the optical waveguide (7) is guided at least in sections and in which the optical waveguide (7) is transported with the help of the fluid,
wherein the optical waveguide (7) has a core (14), a casing (11) and a coating, wherein the coating comprises a protective layer (12) and an outer protective sheath (13), **characterized in that** the outer protective sheath (13) is firmly connected to the protective layer (12), wherein relative movement between the protective layer (12) and the outer protective sheath (13) is blocked.

## Revendications

1. Utilisation d'un guide d'ondes de lumière (7) dans un procédé de mesure optique de la température d'une fonte à haute température (9), dans lequel le guide d'ondes de lumière (7) guide des ondes électromagnétiques d'un point de mesure vers un détecteur optique (5) et est déplacé à l'aide d'un fluide vers le point de mesure à travers une conduite (8) traversée par le fluide, le guide d'ondes de lumière (7) utilisé comportant un noyau (14), une gaine (11) et un revêtement, le revêtement comprenant une couche de protection (12) et une gaine de protection extérieure (13), **caractérisé en ce que** la gaine de protection extérieure (13) est reliée de manière fixe à la couche de protection (12), un mouvement relatif entre la couche de protection (12) et la gaine de protection extérieure (13) étant bloqué.

2. Utilisation d'un guide d'ondes de lumière (7) selon la revendication 1, **caractérisée en ce que** la gaine de protection extérieure (13) est en plastique.

3. Utilisation d'un guide d'ondes de lumière (7) selon la revendication 1 ou 2, le revêtement étant antistatique, à savoir que des moyens antistatiques sont ajoutés à la gaine de protection extérieure (13).

4. Utilisation selon l'une quelconque des revendications précédentes, le guide d'ondes de lumière (7) ayant un poids d'au plus 0,3, de préférence de 0,22 kg par kilomètre de longueur de guide.

5. Utilisation selon l'une quelconque des revendications précédentes, le guide d'ondes de lumière (7) comportant une fibre multimode.

6. Utilisation selon la revendication 4, le guide d'ondes de lumière (7) ayant un diamètre de noyau de 62,5µm et un diamètre de gaine de 125µm.

7. Procédé de mesure optique de la température d'une fonte à haute température (9), le guide d'ondes de lumière (7) guidant des ondes électromagnétiques d'un point de mesure vers un détecteur optique (5) et étant déplacé vers le point de mesure à l'aide d'un fluide à travers une conduite (8) traversée par le fluide, le guide d'ondes de lumière (7) utilisé comportant un noyau (14), une gaine (11) et un revêtement, le revêtement comprenant une couche de protection (12) et une gaine de protection extérieure (13) et la gaine de protection extérieure (13) étant reliée de manière fixe à la couche de protection (12), un mouvement relatif entre la couche de protection (12) et la gaine de protection extérieure (13) étant bloqué.

8. Convertisseur avec un récipient (1) destiné à recevoir du métal en fusion et un dispositif de mesure pour la détermination optique de la température du métal en fusion avec
• un guide d'ondes de lumière (7) pour guider le rayonnement électromagnétique émis par le métal ou par la pointe du guide d'ondes de lumière (7) vers un détecteur optique (5),
• un détecteur optique (5) pour déterminer la température du métal à partir d'une analyse du rayonnement électromagnétique et
• une conduite traversée par un fluide, disposée entre le détecteur optique (5) et le récipient (1), dans laquelle le guide d'ondes de lumière (7) est guidé au moins par sections et dans laquelle le guide d'ondes de lumière (7) est transporté à l'aide du fluide,
le guide d'ondes de lumière (7) comportant un noyau (14), une gaine (11) et un revêtement, le revêtement comprenant une couche de protection (12) et une gaine de protection extérieure (13), **caractérisé en ce que** la gaine de protection extérieure (13) est reliée de manière fixe à la couche de protection (12), un mouvement relatif étant bloqué entre la couche de protection (12) et la gaine de protection extérieure (13).
